# EUROPÄISCHE PATENTSCHRIFT

(11) **EP 3 704 774 B1**
(45) Veröffentlichungstag und Bekanntmachung des Hinweises auf die Patenterteilung: **10.04.2024**
(21) Anmeldenummer: 18789773.1
(22) Anmeldetag: 19.10.2018
(51) Int. Cl.: H02G 3/00

(54) **BAUTEIL MIT EINEM GEHÄUSE, EINEM KABELSTRANG UND EINE ZUGENTLASTUNG**
ASSEMBLY WITH A HOUSING, A CABLE HARNESS AND A STRAIN RELIEF
ASSEMBLAGE AVEC UN BOÎTIER, UN FAISCEAU DE CÂBLES ET UNE DÉCHARGE DE TENSION

(30) Priorität: 30.10.2017 DE 102017125416
(43) Veröffentlichungstag der Anmeldung: 09.09.2020
(73) Patentinhaber: Minebea AccessSolutions Deutschland GmbH, 85253 Erdweg (DE)
(72) Erfinder: KUMMER, Frank, 85253 Erdweg (DE); DIETL, Armin, 85253 Erdweg (DE)
(74) Vertreter: Prinz & Partner mbB
(86) Internationale Anmeldenummer: PCT/EP2018/078770
(87) Internationale Veröffentlichungsnummer: WO 2019/086277

(56) Entgegenhaltungen:
- DE-C1- 3 417 811
- JP-A- H11 329 567
- JP-U- S5 654 526
- US-A- 2 963 536
- US-A- 4 281 887

## Beschreibung

Die Erfindung betrifft eine Zugentlastung für einen Kabelstrang, der zum Anschließen eines Bauteils mit elektrischen und/oder elektronischen Komponenten dient. Die Erfindung betrifft ferner ein Bauteil mit einem Gehäuse, einem Kabelstrang, der in das Gehäuse hineingeführt ist, sowie einer Zugentlastung.

Es gibt eine Vielzahl von elektrischen und/oder elektronischen Geräten, die mittels eines Kabelstrangs angeschlossen werden. Besonders im Automobilbau ist bekannt, dass Elektromotoren, die beispielsweise in Spindelantrieben oder ähnlichen Vorrichtungen eingesetzt werden, mit einem Kabelbaum versehen sind, mit dem sie dann an ein Steuergerät angeschlossen werden.

Im vormontierten Zustand, also wenn ein Ende des Kabelbaums beispielsweise mit dem Elektromotor verbunden ist, besteht das Risiko, dass beim Transport oder der Montage Kräfte wirken, die von den elektrischen und/oder elektronischen Komponenten ferngehalten werden sollten, die an den Kabelbaum angeschlossen sind. Beispielsweise kann auf den Kabelbaum bereits eine Gehäusekappe aufgeschoben sein, und die Kabel des Kabelbaums können an eine Steuerplatine für den Elektromotor angesteckt sein. Um eine Beschädigung der Steuerplatine zu verhindern, sollte vermieden werden, dass die Gehäusekappe hohe Kräfte auf die Steckverbinder des Kabelstrangs und/oder die Steuerplatine ausübt.

In der Vergangenheit wurden verschiedene Vorschläge gemacht, wie eine Kabeldurchführung abgedichtet ausgeführt werden kann, beispielsweise in der US 2 963 536 A, der JP H11 329567 A, der US 4 281 887 A und der DE 34 17 811 C1. Teilweise können die vorgeschlagenen Kabeldurchführungen auch als Zugentlastung wirken. Dokument JPS5654526U offenbart eine Zugentlastung, welche auf den Kabelstrang aufgespritztes ist und aus demselben Material wie die Umhüllung des Kabelstrangs besteht.

Die Aufgabe der Erfindung besteht darin, eine Zugentlastung zu schaffen, die einerseits sehr einfach und mit geringen Kosten vorgesehen werden kann und andererseits eine hohe Widerstandsfestigkeit gegen Zugkräfte aufweist, die auf die Zugentlastung wirken.

Zur Lösung dieser Aufgabe ist ein Bauteil nach Anspruch 1 vorgesehen.

Die Erfindung beruht auf dem Grundgedanken, auf die Adern des Kabelstrangs, vereinfacht ausgedrückt, eine "Verdickung" aufzubringen, mit der verhindert ist, dass das Gehäusebauteil sich über den Punkt hinwegbewegt, an dem sich das Anschlagbauteil befindet.

Vorzugsweise ist vorgesehen, dass das Anschlagbauteil alle Kabel des Kabelstrangs umschließt. Auf diese Weise ergibt sich eine maximale Haltekraft.

Das Anschlagbauteil ist ein Spritzgussteil, das mit geringem Aufwand auf den Kabelstrang aufgespritzt wird.

Gemäß einer bevorzugten Ausführungsform der Erfindung besteht das Anschlagbauteil aus einem Schmelzklebstoff. Hierdurch ergibt sich eine besonders hohe Haltekraft des Anschlagbauteils auf dem Kabelstrang.

Gemäß der Erfindung weist die Aufnahme eine sich von der Innenseite zur Außenseite des Gehäuses verringernde Querschnittsfläche auf. Insbesondere kann die Aufnahme konisch sein. Die sich verringernde Querschnittsfläche hat den Vorteil, dass dann, wenn Zugkräfte auf das Anschlagbauteil wirken, die Aufnahme eine nach innen gerichtete Klemmkraft erzeugt, die die Festigkeit erhöht, mit der das Anschlagbauteil auf den Kabeln haftet.

Gemäß einer Ausgestaltung der Erfindung kann die Aufnahme eine Rastvertiefung aufweisen, in die eine am Anschlagbauteil vorgesehene Rastnase eingreifen kann. Diese Gestaltung gewährleistet, dass das Anschlagbauteil in die Aufnahme formschlüssig einrastet, sodass sie dort den Durchtritt des Kabelstrangs durch das Gehäuse abdichtet.

Die Erfindung wird nachfolgend anhand einer Ausführungsform beschrieben, die in den beigefügten Zeichnungen dargestellt ist. In diesen zeigen:
- Figur 1 eine Draufsicht auf einen Kabelstrang mit Anschlagbauteil und Gehäuse;
- Figur 2 eine Seitenansicht der Bauteile von Figur 1;
- Figur 3 einen Schnitt durch das Gehäuse in einem Zustand, in dem das Anschlagbauteil die Aufnahme im Gehäuse verschließt; und
- Figur 4 eine perspektivische Ansicht des Gehäuses.

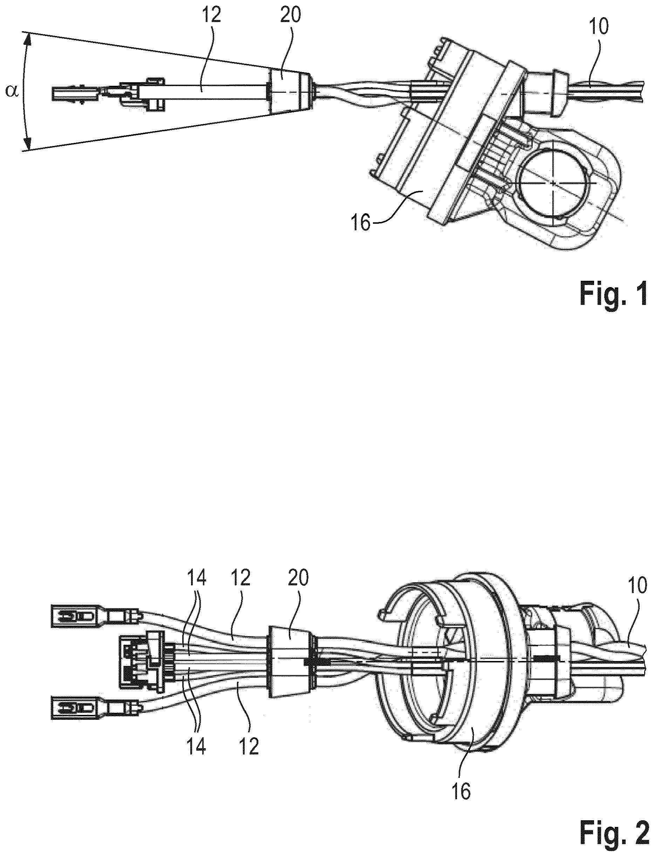

In den Figuren 1 bis 3 ist ein Kabelstrang 10 zu sehen, der im gezeigten Beispiel zwei Kabel 12 aufweist, mittels denen ein hier nicht gezeigter Elektromotor mit elektrischer Energie versorgt werden kann, sowie mehrere Kabel 14, über die Steuer- und/oder Sensorsignale übertragen werden können.

Der Elektromotor ist im fertig montierten Zustand in einem Gehäuse angeordnet, von dem hier lediglich eine Gehäusekappe 16 zu sehen ist. Die Gehäusekappe 16 dient u. a. als Durchführung für den Kabelstrang 10 von der Innenseite des Gehäuses zum Außenraum.

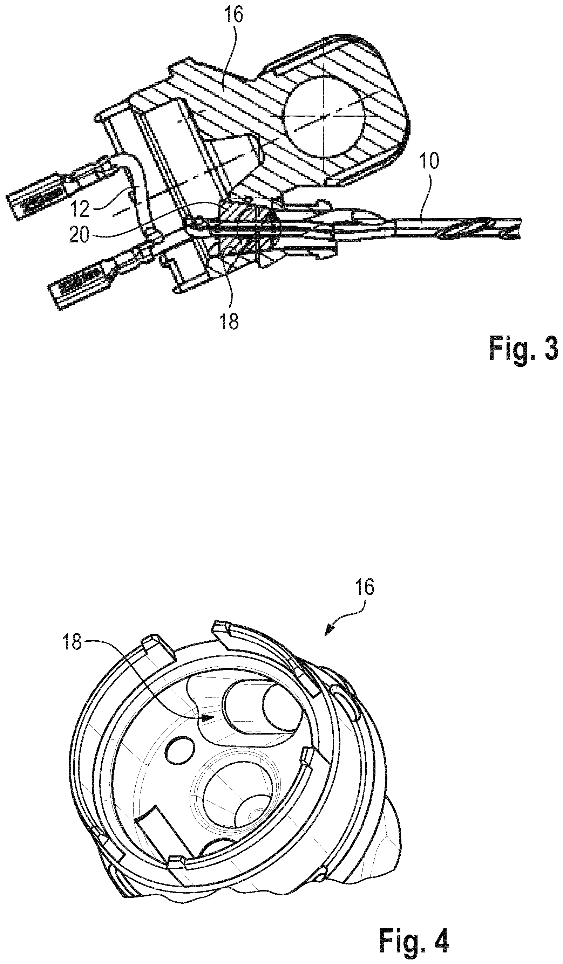

Konkret wird der Kabelstrang 10 durch eine Aufnahme 18 hindurchgeführt, die, in einem Schnitt senkrecht zur Durchführungsrichtung betrachtet, die Form eines Langlochs hat. Entlang der Durchführungsrichtung betrachtet hat die Aufnahme 18 eine Querschnittsfläche, die sich von innen nach außen verringert. Dies ist in Figur 3 zu sehen; die Querschnittsfläche auf der rechten Seite der Aufnahme 18 ist kleiner als auf der linken Seite.

Die Querschnittsfläche der Aufnahme 18 verringert sich gleichmäßig, sodass insgesamt eine konische Form gebildet ist.

Auf dem Kabelstrang 10 ist ein Anschlagbauteil 20 angeordnet, das dafür vorgesehen ist, mit der Aufnahme 18 zusammenzuwirken. Dementsprechend hat das Anschlagbauteil 20 eine konische Außenform (siehe insbesondere die Figuren 1 und 2), die so an die Kontur der Aufnahme 18 angepasst ist, dass das Anschlagbauteil 20 dicht in der Aufnahme 18 aufgenommen werden kann (siehe insbesondere Figur 3).

Der Kegelwinkel α des Anschlagbauteils 20 liegt vorzugsweise in der Größenordnung von 10° bis 20°.

Das Anschlagbauteil 20 ist ein Spritzgussteil, das alle Kabel des Kabelstrangs 10 umschließt. Anders ausgedrückt: Das Anschlagbauteil 20 hat eine umlaufende Außenkontur, innerhalb der sämtliche Kabel 12, 14 liegen.

Als Material für das Anschlagbauteil 20 ist insbesondere ein Schmelzklebstoff geeignet, der ein sehr gutes Haftvermögen auf den Kabeln 12, 14 hat. Hierdurch kann ohne weitere Maßnahmen eine Haltekraft in axialer Richtung erhalten werden, die auch bei Testbedingungen mit erhöhter Temperatur (beispielsweise 45 °C) über einen Zeitraum von 30 Sekunden deutlich oberhalb von 50 N liegt.

Das Anschlagbauteil 20 gewährleistet dadurch, dass die Gehäusekappe 16 bei vormontiertem Kabelstrang keine Kräfte auf beispielsweise eine Steuerplatine ausüben kann, die am Kabelstrang 10 montiert ist.

## Patentansprüche

1. Bauteil mit einem Gehäuse (16), einem Kabelstrang (10), der in das Gehäuse (16) hineingeführt ist, und einer Zugentlastung, wobei die Zugentlastung für den Kabelstrang (10), der zum Anschließen des Bauteils mit elektrischen und/oder elektronischen Komponenten dient und mindestens zwei Kabel (12, 14) aufweist, ein Anschlagbauteil (20) aufweist, das aus Kunststoff besteht und alle Kabel (12, 14) dicht so umschließt, dass das Anschlagbauteil (20) unverschiebbar auf den Kabeln (12, 14) fixiert ist, wobei das Anschlagbauteil (20) ein auf den Kabelstrang (10) aufgespritztes Spritzgussteil ist, wobei das Gehäuse (16) eine Aufnahme (18) für das Anschlagbauteil (20) aufweist, in der dieses in zumindest einer Zugrichtung formschlüssig aufgenommen ist, wobei das Bauteil ausgelegt ist Teil eines Spindelantriebs zu sein, **dadurch gekennzeichnet, dass** die Aufnahme (18) eine sich von einer Innenseite zu einer Außenseite des Gehäuses (16) verringernde Querschnittsfläche hat.

2. Bauteil nach Anspruch 1, **dadurch gekennzeichnet, dass** das Anschlagbauteil (20) aus einem Schmelzklebstoff besteht.

3. 4-- Bauteil nach einem der vorhergehenden Ansprüche, **dadurch gekennzeichnet, dass** das Anschlagbauteil (20) eine Rastnase aufweist.

4. Bauteil nach einem der vorhergehenden Ansprüche, **dadurch gekennzeichnet, dass** die Aufnahme (18) konisch ist.

5. Bauteil nach einem der vorhergehenden Ansprüche, **dadurch gekennzeichnet, dass** die Aufnahme (18) eine Rastvertiefung aufweist, in die eine Rastnase des Anschlagbauteils (20) eingreifen kann.

6. Spindelantrieb mit einem Bauteil nach einem der vorhergehenden Ansprüche.

## Claims

1. A component comprising a housing (16), a cable harness (10), which is guided into the housing (16), and a strain relief, wherein the strain relief for the cable harness (10), which is used for connecting the component to electrical and/or electronic components and includes at least two cables (12, 14), includes a stop component (20) which is made from plastic and tightly encloses all cables (12, 14) such that the stop component (20) is non-displaceably fixed in place on the cables (12, 14), the stop component (20) being an injection-molded part which is injection-molded on the cable harness (10), the housing (16) including a retainer (18) for the stop component (20), in which the latter is received in a form-locking manner in at least one direction of pull, the component being designed to be part of a spindle drive, **characterized in that** the retainer (18) has a cross-sectional area that decreases from an inside to an outside of the housing (16).

2. The component according to claim 1, **characterized in that** the stop component (20) is made of a hot-melt adhesive.

3. The component according to either of the preceding claims, **characterized in that** the stop component (20) includes a detent lug.

4. The component according to any of the preceding claims, **characterized in that** the retainer (18) is conical.

5. The component according to any of the preceding claims, **characterized in that** the retainer (18) includes a latching recess in which a detent lug of the stop component (20) can engage.

6. A spindle drive comprising a component according to any of the preceding claims.

## Revendications

1. Composant présentant un boîtier (16), un faisceau de câbles (10) guidé dans le boîtier (16), et une décharge de traction, la décharge de traction pour le faisceau de câbles (10) qui sert au raccordement du composant à des composants électriques et/ou électroniques et présente au moins deux câbles (12, 14), présentant un composant de butée (20) qui est réalisé en matière plastique et qui entoure étroitement l'ensemble des câbles (12, 14) de sorte que le composant de butée (20) est fixé de manière non-déplaçable sur les câbles (12, 14), le composant de butée (20) étant une pièce moulée par injection qui est moulée par injection sur le faisceau de câbles (10), le boîtier (16) présentant un logement (18) pour le composant de butée (20), dans lequel ce dernier est reçu par coopération de formes au moins dans un sens de traction, le composant étant réalisé de manière à faire partie d'un entraînement à broche, **caractérisé en ce que** le logement (18) présente une superficie de section transversale diminuant d'un côté intérieur à un côté extérieur du boîtier (16).

2. Composant selon la revendication 1, **caractérisé en ce que** le composant de butée (20) est réalisé en un adhésif thermofusible.

3. Composant selon l'une des revendications précédentes, **caractérisé en ce que** le composant de butée (20) présente un talon d'enclenchement.

4. Composant selon l'une des revendications précédentes, **caractérisé en ce que** le logement (18) est conique.

5. Composant selon l'une des revendications précédentes, **caractérisé en ce que** le logement (18) présente un évidement d'enclenchement dans lequel un talon d'enclenchement du composant de butée (20) peut s'engager.

6. Entraînement à broche comprenant un composant selon l'une des revendications précédentes.
